# EUROPÄISCHE PATENTSCHRIFT

(11) **EP 0 635 195 B1**
(45) Veröffentlichungstag und Bekanntmachung des Hinweises auf die Patenterteilung: **03.04.1996**
(21) Anmeldenummer: 94111451.4
(22) Anmeldetag: 22.07.1994
(51) Int. Cl.: A01C 7/12

(54) **Sämaschine**
Sowing machine
Semoir

(30) Priorität: 23.07.1993 DE 4324742
(43) Veröffentlichungstag der Anmeldung: 25.01.1995
(73) Patentinhaber: RAUCH LANDMASCHINENFABRIK GMBH, D-76547 Sinzheim (DE)
(72) Erfinder: Rauch, Norbert, D-76547 Sinzheim (DE); Schickinger, Harald, D-76547 Sinzheim (DE); Schickinger, Manfred, D-76547 Sinzheim (DE)
(74) Vertreter: Lichti, Heiner, Dipl.-Ing.

(56) Entgegenhaltungen:
- DE-C- 206 593
- DE-C- 330 100
- DE-C- 609 579
- DE-C- 618 606
- Prospekt D 75 40 10-0291 "ACCORD PNEUMATIC" der Firma Accord Landmaschinen H. WEISTE & Co.

## Beschreibung

Die Erfindung betrifft eine Sämaschine mit einem Saatgutbehälter mit wenigstens einer Auslauföffnung, einem daran anschließenden Auslaufschacht und einer in deren Seitenwänden gelagerten Dosiereinrichtung, bestehend aus einem drehangetriebenen, axial verstellbaren Zellenrad zum Dosieren von Normalsaat, das an seiner einen Seite mittels einer mit ihm axial beweglichen, drehfesten Hülse in der einen Seitenwand gelagert ist, leistenförmigen Füllkörpern, die auf dem Zellenrad axial verstellbar sind und an ihrem Umfang Dosierspalte zum Dosieren von Feinsaat bilden, und einem diese Dosierspalte axial begrenzenden Lagerteil, mit dem die Dosiereinrichtung in der anderen Seitenwand drehgelagert ist.

Sämaschinen sind im wesentlichen in zwei Bauarten bekannt. Bei der einen Bauart - den sogenannten Kastensämaschinen - wird das Saatgut ausschließlich durch Schwerkraft ausgetragen, indem es aus dem Saatgutbehälter über Dosiereinrichtungen den einzelnen Särohren zudosiert wird. Diese Bauweise setzt eine über die gesamte Arbeitsbreite wirksame Dosiereinrichtung voraus. Bei der anderen Bauart wird das Saatgut über eine zentrale Dosiereinheit in einen pneumatischen Förderstrom eingespeist und von diesem über einen Verteiler den einzelnen Säleitungen und schließlich den Säscharen zugeführt. Bei dieser Bauart ist zwar eine aufwendige Fördertechnik notwendig, was jedoch durch eine weniger bauaufwendige Dosiertechnik kompensiert wird.

Bei beiden Bauarten geschieht das Dosieren mittels Zellenrädern, die in der Auslauföffnung des Saatgutbehälters angeordnet sind. Diese Dosiereinrichtungen müssen so ausgestaltet sein, daß nicht nur ein bestimmtes Saatgut in variierender Menge ausgetragen werden kann, sondern es muß diese Möglichkeit zudem für eine Vielzahl unterschiedlicher Saatgüter, die sich vornehmlich durch die Form und insbesondere durch die Größe des Einzelkorns unterscheiden, gegeben sein. Dies setzt eine Dosiereinrichtung mit großer Variationsbreite im Dosiervolumen voraus.

Bei der eingangs beschriebenen Sämaschine (DE 618 606) weist das Zellenrad an seiner einen Stirnseite eine nach außen offene Muffe auf, die einerseits den stirnseitigen Abschluß der Zellen bildet, andererseits mit ihrem hülsenartigen Teil eine Öffnung in der Seitenwand des Zulaufschachtes dichtend durchgreift. Das Zellenrad selbst durchgreift eine Öffnung an der gegenüberliegenden Seitenwand des Zulaufschachtes und überragt diese nach außen. Im Bereich der Öffnung der Seitenwand greifen in die Dosierzellen diese abdichtende Füllkörper ein, die in der Seitenwand drehbar, aber axialfest gelagert sind. Das Zellenrad sitzt drehfest auf der Antriebswelle und kann zusammen mit dieser axial verschoben werden, so daß sich die in der Auslauföffnung wirksame Breite des Zellenrades und damit deren Volumen verändern lassen. So läßt sich das Zellenrad für Feinsaat, z.B. Raps, auf eine kleinste wirksame, axiale Breite, für großkörniges Saatgut, z.B. Bohnen od.dgl., auf eine größte wirksame Breite einstellen, wobei eine Vielzahl von Zwischenstellungen, beispielsweise für die üblichen Getreidesorten, möglich ist. Der stirnseitige Abschluß und der hülsenförmige Teil der Muffe einerseits und die in die Dosierzellen eingreifenden Füllkörper andererseits sollen dafür sorgen, daß das Saatgut nicht axial durch die Öffnungen in den Seitenwänden des Zulaufschachtes austreten kann und somit das Säergebnis verfälscht wird bzw. Saatgut verloren geht. Dies ist jedoch im hülsenartigen Bereich der Muffe nicht gewährleistet, weil diese in der entsprechenden Öffnung der Seitenwand ein ausreichendes Spiel haben muß, um in dieser Öffnung frei drehen zu können. Es kann deshalb insbesondere Feinsaat durch den axialen Ringspalt austreten. Weiterhin von Nachteil ist der relativ geringe Variationsbereich und die insbesondere bei Feinsaat unzureichende Dosiergenauigkeit. Auch sind die Dosierzellen ungünstig gestaltet, so daß sich Saatgut leicht festsetzen kann.

Bei einer anderen bekannten Ausführung (DE 609 579) sitzt das Zellenrad drehfest auf einer Antriebswelle, die ihrerseits mittels eines Stellhebels für das Dosieren von Normalsaat axial verschieblich ist. Außerhalb des Bereichs der Zellen weist das Zellenrad an seinem einen Ende einen verjüngten Außendurchmesser auf, mit dem es in einer eine Wellendurchführung bildenden Hülse drehbar gelagert ist. Die Hülse ist mit der Antriebswelle axial gekuppelt und außenseitig über ein Profil in der einen Seitenwand drehfest abgestützt. Diese gegenüber der Seitenwand nur linear bewegliche Hülse bildet zugleich die Abdichtung an der einen Seite. An der gegenüberliegenden Seite greifen in die Zellen leistenartige Füllstücke ein, die in einem Lagerteil an der anderen Seitenwand axial geführt und an ihrem außen liegenden Ende mit einem Ring verbunden sind. Dieser sitzt drehbar in einem axial verschieblichen Schublager mit einem Stellhebel für das Dosieren der Feinsaat. Die leistenartigen Füllstücke weisen ihrerseits an ihrem Umfang Dosierzellen von geringer Tiefe für die Feinsaat auf. Das in der Seitenwand drehbar gelagerte, die Füllstücke axial führende Lagerteil sorgt für die Abdichtung des Zellenrades an der anderen Seite. Diese Ausführungsform hat gegenüber der zuvor genannten Ausführung hinsichtlich der Abdichtung und der Ausbildung der Dosierzellen, die glattwandig sind, einige Vorteile, jedoch den entscheidenen Nachteil, daß jede Änderung der Dosiermenge für Normalsaat oder Feinsaat mittels des entsprechenden Stellhebels ein Nachführen des Stellhebels für das jeweils andere Saatgut erforderlich macht, also stets zwei Einstellungen vorgenommen werden müssen. In allen Dosierstellungen läuft das Zellenrad mit seiner einen Stirnseite an der Stirnseite der stillstehenden Hülse entlang. Da diese eine sehr unregelmäßige Umfangskontur hat, deren Achsabstand teils kleiner, teils größer als der Durchmesser des Zellenrades ist, kann das Saatgut aus den Dosierzellen axial in die Taschen zwischen dieser Umfangskontur einerseits und der Stirnseite des Zellenrades und der Seitenwand andererseits auswandern und bleibt dort liegen oder wird im Spaltbereich gequetscht. Bei größter Dosiermenge läuft das Zellenrad an der Seitenwand entlang, so daß auch in dem dort vorhandenen Spalt Saatgut eindringen und gequetscht werden kann.

Schließlich ist in der Praxis eine Ausführungsform weitverbreitet (Prospekt D75 40 10-0291 "ACCORD-PNEUMATIC" - der Firma ACCORD Landmaschinen H. Weiste & Co. GmbH), bei der in das Zellenrad für die Normalsaat wiederum leistenförmige Füllstücke eingreifen, deren Außenseiten auf einem Umfang liegen, dessen Durchmesser kleiner ist als der Außendurchmesser des Zellenrades, so daß zwischen den Außenseiten der Füllstücke und den Zellenstegen teilringförmige Dosierzellen für die Feinsaat gebildet werden. Die axiale Begrenzung dieser Feindosierzellen erfolgt durch weitere diese ausfüllende leistenartige Füllstücke. Diese wiederum werden auf der Saatgut-Zulaufseite von einer Schubhülse übergriffen. Bei dieser Ausführung sind die Antriebswelle und das mit ihr drehfest verbundene Zellenrad axial unverschieblich angeordnet. Die Füllstücke sitzen axial verschieblich auf der Welle und können für die Feinsaat, in der sie die Dosierzellen vollständig ausfüllen, axial festgesetzt werden, während die in die Feindosierzellen eingreifenden Füllstücke zusammen mit der Überschubhülse mittels einer Spindel axial verstellbar sind, um die Feinsaat zu dosieren. In einer weiteren Stellung lassen sich die inneren Füllstücke mit den äußeren und der Überschubhülse kuppeln und zusammen mit diesen mittels der Spindel axial verstellen, um durch Veränderung des freien Querschnitts der Zellen des Zellenrades Normalsaat zu dosieren. Von Vorteil ist hierbei, daß die für die Feinsaat notwendigen Bauteile bei der Normalsaatdosierung automatisch mitgenommen werden, also nur eine Stelleinrichtung notwendig ist, und die stirnseitige Abdichtung des Zellenrades relativ problemlos ist. Von Nachteil ist die Vielzahl von kompliziert geformten Bauteilen, und die Tatsache, daß das Saatgut leicht in den Spalt zwischen Überschubhülse und Dosiereinheit eindringt und seitlich auswandert (ungenaue Dosierung) oder gar aufgrund der Umlaufbewegung im Spalt gequetscht wird. Ungünstig ist auch die exzentrische Einleitung der Stellkräfte der Spindel in die axial beweglichen Bauteile, was zu Kippkräften und damit zu Schwergängigkeit oder gar zum Verklemmen führt.

Der Erfindung liegt die Aufgabe zugrunde, eine Sämaschine des eingangs genannten Aufbaus (DE 609 579) dahingehend weiterzuentwickeln, daß bei großer Variationsbreite und hoher Dosiergenauigkeit ein exaktes Säergebnis mit geringem konstruktiven Aufwand und ohne Schädigung des Saatgutes erreicht wird.

Diese Aufgabe wird durch die kennzeichnenden Merkmale des Anspruchs 1 gelöst.

Mit der erfindungsgemäßen Ausbildung ergeben sich gegenüber dem gattungsgemäßen Stand der Technik (DE 609 579) folgende Vorteile: Der eine stirnseitige Abschluß sämtlicher Dosierzellen bzw. Dosierspalte des Zellenrades wird von der das Zellenrad lagernden Hülse gebildet, die zugleich die Abdichtung an der Seitenwand besorgt. Damit herrschen am Spalt zwischen Hülse und Zellenrad eindeutige Verhältnisse. Der Spalt läßt sich eng tolerieren, so daß Saatgut weder aus den Zellen seitlich auswandern, noch gequetscht werden kann. Während bei der bekannten Dosiereinrichtung die Füllkörper über den gesamten Feinsaat-Dosierbereich stufenlos axial verstellbar sein müssen, werden die erfindungsgemäßen Füllkörper in der Normalsaat- und der Feinsaat-Position axial fixiert. In der Normalsaat-Position schließen sie mit ihren inneren Enden bündig an der anderen Seitenwand ab, wie dies auch bei der bekannten Ausführung der Fall ist, während sie in der anderen Position die Dosierzellen völlig verschließen und der Hülse anliegen. Der bedeutendste Vorteil liegt darin, daß nur eine einzige Stelleinrichtung für das Dosieren von Normalsaat und Feinsaat notwendig ist, indem in der Normalsaat-Position bei axial festgesetzten Füllkörpern nur das Zellenrad axial verstellt wird und beim Dosieren von Feinsaat die Füllkörper mit der Hülse und dem Zellenrad axial bewegt werden, wobei die Dosierspalte einerseits durch die Hülse, andererseits durch das Lagerteil axial begrenzt sind und die Stellkraft auf das Zellenrad und die Füllkörper übertragen wird. Eine einzige Stelleinrichtung ist zwar bekannt (Prospekt der Firma ACCORD a.a.O.), jedoch wird dort die Stellkraft exzentrisch eingeleitet mit den oben genannten Nachteilen.

Vorzugsweise ist die Hülse kreiszylindrisch walzenförmig ausgebildet und außerhalb der Seitenwand drehfest abgestützt, wobei mit Vorteil die Hülse und das Zellenrad den gleichen Außendurchmesser aufweisen. Durch die Verlagerung der Drehmomentenstütze nach außen, kann die Hülse eine glattwandige Walzenform aufweisen, so daß sich keine Taschen bilden und eine einfache und funktionssichere Führung in der Seitenwand gegeben ist. Die Hülse kann gegebenenfalls einen etwas größeren Außendurchmesser als das Zellenrad aufweisen, sollte aber keinesfalls einen kleineren besitzen.

In zweckmäßiger Ausführung ist vorgesehen, daß die leistenförmigen Füllkörper an ihren außerhalb des Auslaufschachtes liegenden Enden an einem Tragring angeordnet sind, der an seinem Innenumfang Radialnuten aufweist, mit denen er auf den Zellenradstegen geführt ist. Es lassen sich somit sämtlich Füllkörper mittels des Tragrings zwischen den beiden Positionen "Normalsaat" und "Feinsaat" axial auf dem Zellenrad verstellen.

In weiterer Ausgestaltung kann vorgesehen sein, daß an dem Tragring Klinkenhebel gelagert sind, die zur axialen Festlegung der Füllkörper in der Normalsaat-Position in eine maschinenfeste Ringnut und in der Feinsaat-Position in eine Nut am Zellenrad einlegbar sind. Für das Umstellen von Normalsaat auf Feinsaat brauchen also nur die Klinken ausgehoben, um ihr Lager am Tragring geschwenkt und in die Nut am Zellenrad wieder eingelegt zu werden.

Gemäß einem weiteren Merkmal der Erfindung ist vorgesehen, daß die Hülse mit ihrer innen liegenden Stirnseite der ihr zugekehrten Stirnseite des Zellenrades bis auf ein geringes Spiel anliegt und in ihrem dem Auslaufschacht zugekehrten Bereich einen größeren Abstand aufweist.

Auf diese Weise ist gewährleistet, daß selbst dann, wenn Saatgut zwischen dem umlaufenden Zellenrad und dem stillstehenden walzenförmigen Abschluß eindringen sollte, dieses in jedem Fall in den Auslaufschacht abgegeben wird.

Üblicherweise wird bei Sämaschinen die Dosiereinrichtung von einem Bodenrad (Spornrad) angetrieben, wodurch einerseits eine fahrgeschwindigkeitsabhängige Dosierung möglich ist, andererseits bei stehender Maschine kein Saatgut ausgetragen wird. Durch Ausheben des Bodesrades läßt sich die Dosiereinrichtung auch willkürlich stillsetzen. Gemäß einer Ausführungsform der Erfindung ist vorgesehen, daß das Bodenrad mit einem Stirnrad am Lagerteil getrieblich verbunden ist. Bei der erfindungsgemäßen Ausbildung wird also das Drehmoment umfangseitig in die Dosiereinrichtung eingeleitet, indem das angetriebene Lagerteil aufgrund des Formschlusses mit den Zellenradstegen das Drehmoment auf das Zellenrad überträgt. Es ist also im Gegensatz zum gattungsgemäßen Stand der Technik keine zentrale Antriebswelle notwendig, die über den gesamten Dosierbereich unter Aufrechterhaltung der Antriebsverbindung verstellbar sein müßte.

In weiterhin vorteilhafter Ausführung ist vorgesehen, daß die Getriebeverbindung ein Zahnrad aufweist, das im Säbetrieb mit dem Stirnrad am Lagerteil kämmt, und zum Unterbrechen der Getriebeverbindung ausrückbar ist. Auf diese Weise kann die Dosiereinrichtung antriebsseitig freigestellt werden, so daß das Zellenrad für eine Abdrehprobe behinderungsfrei manuell oder durch einen Stellmotor gedreht werden kann.

Um das Saatgut im Bereich der Auslauföffnung fließfähig zu halten, ist oberhalb derselben im Saatgutbehälter ein Rührwerk angeordnet, dessen Welle nach außen geführt und mit dem Bodenrad getrieblich verbunden ist. Erfindungsgemäß ist nun vorgesehen, daß die Welle des Rührwerks ein Ritzel aufweist, das mit dem Stirnrad am Lagerteil kämmt, so daß eine Antriebsverbindung vom Bodenrad über das Stirnrad des Lagerteils zum Rührwerk gegeben ist, wobei die Antriebsverbindung zum Rührwerk vorzugsweise kuppelbar ist, indem beispielsweise das Ritzel ausrückbar ist, so daß das Rührwerk allein stillgesetzt werden kann.

In weiterhin bevorzugter Ausführung ist vorgesehen, daß das Zellenrad drehfest und die Hülse drehfrei auf einer gemeinsamen Achse fluchtend hintereinander angeordnet sind und die Stelleinrichtung direkt oder über die Hülse auf die Achse wirkt. Im Gegensatz zum Stand der Technik dient als Stellglied nicht ein umlaufendes, sondern nur linear bewegliches Bauteil, wodurch die Konstruktion erheblich vereinfacht ist. Die Stellkräfte werden koaxial auf das Zellenrad und damit achssymmetrisch übertragen, so daß bei geringstem Kraftaufwand eine einwandfreie Funktion gewährleistet ist. Als Stelleinrichtung kann eine maschinenfest geführte Spindel dienen.

Das Zellenrad läuft in der Weise um, daß es mit seinem oberen Scheitel von außen her in die Auslauföffnung eintaucht, anschließend in seinen Dosierzellen das Saatgut aufnimmt und im Bereich seines unteren Scheitels durch die Auslauföffnung wieder nach außen in den Auslaufschacht tritt, wobei in diesem Bereich eine elastische Abstreifleist angeordnet ist, um eine gleichbleibende Füllung der Dosierzellen bis zur Abgabe des Saatgutes zu gewährleisten, andererseits das Saatgut im Behälter zurückzuhalten. Bei den bekannten Ausführungen ist hierfür eine relativ steife Gummileiste vorgesehen, die sich aufgrund der ständigen Beanspruchung durch das Dosierrad in einer Richtung allmählich verformt und dann nicht mehr einwandfrei abschließt. Auch kann es aufgrund der relativ großen Steifigkeit zum Zerquetschen des Saatgutes kommen. Dieser Nachteil wird erfindungsgemäß dadurch behoben, daß die Abstreifleiste aus einer Vielzahl nebeneinander angeordneter, einzeln beweglicher Abstreiflappen besteht, die vorteilhafter Weise aus gummielastisch ummantelten Federstahlfingern bestehen. Auf diese Weise weichen die einzelnen Abstreiflappen nur dort aus, wo die auftretenden Kräfte zu groß werden, so daß jeder einzelne Abstreiflappen weniger stark belastet ist, als eine durchgehende Abstreifleiste, und somit seine Abstreiffunktion länger erfüllen kann. Da der nicht-aktive Bereich der Dosiereinrichtung von der walzenförmigen, feststehenden Hülse gebildet ist, wird die Abstreifleiste in diesem Bereich überhaupt nicht beansprucht.

Um den Saatgutbehälter nach der Säarbeit entleeren oder auch eventuelle Störungen im Bereich des Rührwerks und der Dosiereinrichtung schnell beheben zu können, weist der Saatgutbehälter einen zur Auslauföffnung führenden Zulaufschacht auf, dessen untere Begrenzungswand zur Freigabe des Rührwerks und des Zellenrades abklappbar ist. Das Klappgelenk liegt bei herkömmlichen Sämaschinen im unteren Bereich der Begrenzungswand. Erfindungsgemäß ist hingegen die Begrenzungswand an ihrem oberen, dem Saatgutbehälter zugekehrten Bereich angelenkt, so daß sie vom Zellenrad weg abklappbar ist und ein großer freier Querschnitt für den Durchlauf des Saatgutes zur Verfügung steht.

Schließlich kann vorgesehen sein, daß der an die Auslauföffnung anschließende Auslaufschacht unmittelbar hinter der Abstreifleiste einen abklappbaren Boden aufweist.

Auf diese Weise kann das Saatgut unmittelbar hinter der Auslauföffnung nach unten fallen, um beispielsweise bei untergestelltem Behälter in einfacher Weise eine Abdrehprobe durchzuführen, wobei sichergestellt ist, daß kein Saatgut im Auslaufschacht liegen bleibt.

Nachstehend ist die Erfindung anhand eines in der Zeichnung wiedergegebenen Ausführungsbeispiels beschrieben. In der Zeichnung zeigen:
- Figur 1:: einen Längsschnitt der Dosiereinrichtung im Bereich der Auslauföffnung des Saatgutbehälters in der Normalsaat-Stellung;
- Figur 2:: einen Schnitt II-II gemäß Figur 1;
- Figur 3:: einen der Figur 1 entsprechenden Teilschnitts in der Feinsaat-Stellung;
- Figur 4:: einen Schnitt IV-IV gemäß Figur 3 und
- Figur 5:: eine schematische Stirnansicht auf das Stirnrad der Antriebsverbindung.

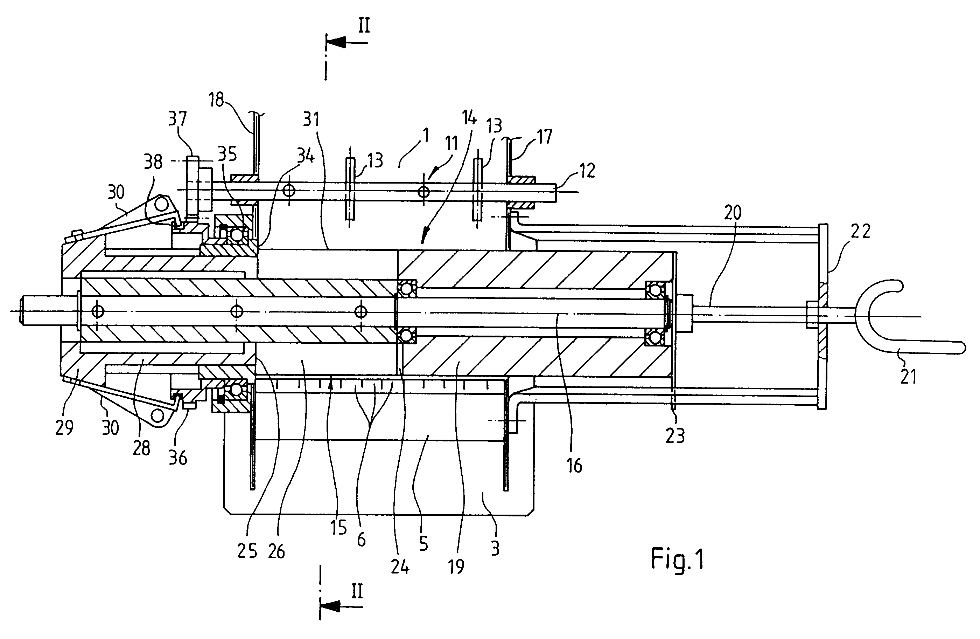

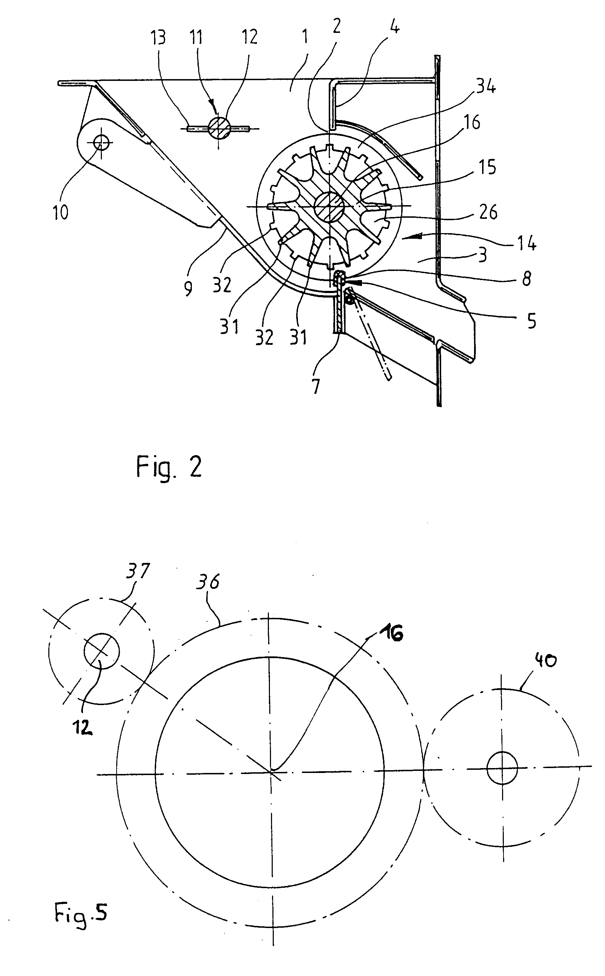

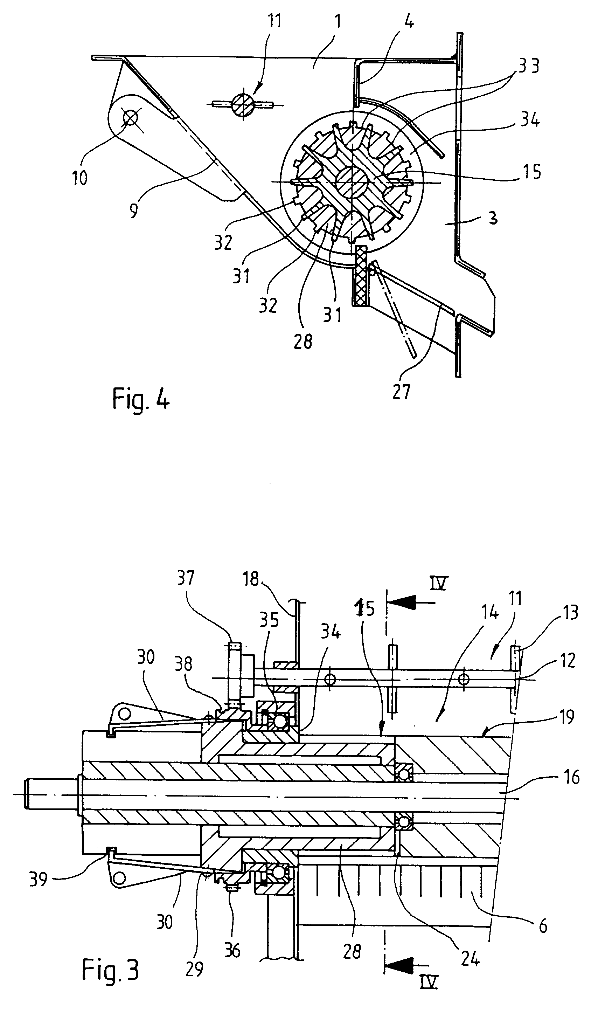

In der Zeichnung sind von dem Saatgutbehälter lediglich der Zulaufschacht 1, die Auslauföffnung 2 und der daran anschließende Auslaufschacht 3 gezeigt. Die Auslauföffnung 2 ist in einer senkrechten Trennwand 4 zwischen Zulaufschacht 1 und Auslaufschacht 3 angeordnet (Fig. 2 u. 4). Die untere Begrenzungskante der Auslauföffnung 2 wird von einer Abstreifleiste 5 gebildet, die, wie Figur 1 und 3 erkennen lassen, aus einzelnen Abstreiflappen 6 gebildet ist, die wiederum, wie Figur 2 zeigt, aus Stahlfederfingern oder -blättern 7 mit einer Gummiummantelung 8 bestehen können. Die untere Begrenzungswand 9 des Zulaufschachtes 1 ist an einem oberen Gelenk 10 klappbar angebracht und kann mit oder ohne die Abstreifleiste 5 in Figur 2 nach links weggeklappt werden.

Innerhalb des Zulaufschachtes 1 befindet sich ein Rührwerk 11, das eine Rührwerkswelle 12 mit Rührfingern 13 aufweist. Innerhalb der Auslauföffnung 2 ist eine insgesamt mit 14 bezeichnete Dosiereinrichtung angeordnet, die das über den Zulaufschacht 1 zulaufende Saatgut in dosierter Form in den Auslaufschacht 3 abgibt.

Die Dosiereinrichtung 14 weist ein Zellenrad 15 auf, das drehfest auf einer zentralen Achse 16 sitzt. Die gesamte Dosiereinrichtung 14 ist in den Seitenwänden 17, 18 des Zulauf- bzw. Auslaufschachtes 1, 3 gelagert und geführt.

Das Zellenrad 15 wird an seiner in Figur 1 rechten Stirnseite von einer kreiszylindrischen walzenförmigen Hülse 19 begrenzt, die auf der Achse 16 drehfrei gelagert ist. Die Hülse 19 durchgreift die eine Seitenwand 17 des Auslaufschachtes und ist an ihrer äußeren Stirnseite mit einer Stelleinrichtung in Form einer Spindel 20 verbunden, die in einem an der Seitenwand 17 befestigten Lagerschild 22 geführt und mit einer Handhabe 21 versehen ist. Zur Drehsicherung der walzenförmigen Hülse 19 dient eine an deren äußerer Stirnseite angeordnete Drehmomentstütze 23, die in einem achsparallen Schlitz des Lagerschildes 22 eingreift und in diesem geführt ist. Die innere Stirnseite der Hülse 19 weist einen schmalen Spalt zu der ihr zugekehrten Stirnseite des Zellenrades auf, der aber im Bereich außerhalb der Auslauföffnung 2, wie bei 24 angedeutet, eine etwas größere Breite besitzt, um eventuell in den Spalt eindringendes Saatgut in den Auslaufschacht abzugeben.

Das Zellenrad 15 mit den Dosierzellen 26 läßt sich zusammen mit der Antriebswelle 16 und der walzenförmigen Hülse 19 mittels der Spindel 20 axial verstellen. Die Dosierzellen 26 des Zellenrades 25 sind an ihrer in der Zeichnung rechten Stirnseite durch die ihnen zugekehrte Stirnseite der Hülse 19 geschlossen, wobei Hülse und Zellenrad vorzugsweise durchmessergleich sind. An der gegenüberliegenden Stirnseite ist für die Dosierzellen 26 ein Abschluß 25 vorgesehen. Dieser weist an einem gemeinsamen Tragring 29 achsparallel angeordnete Füllkörper 28 auf, welche in die Dosierzellen 26 des Zellenrades 15 eingreifen. Der Tragring 29 ist mittels Radialnuten auf den Zellenradstegen 31, welche die Dosierzellen seitlich begrenzen, axial geführt. Bei feststehendem, stirnseitigem Abschluß 25 kann die axiale Länge der Dosierzellen 26 und damit deren Volumen durch Drehen der Spindel 20 verändert werden, und zwar zwischen der maximalen axialen Breite der Zellen, die etwa dem Abstand der Seitenwände 17, 18 an der Auslauföffnung entspricht, über die in Figur 1 gezeigte Zwischenstellung bis zu einer nicht gezeigten Minimalbreite. Da die Hülse 19 stets drehfest angeordnet ist, ist im Bereich ihres Durchgriffs durch die Seitenwand 17 eine sehr exakte Abdichtung gegeben.

Der stirnseitige Abschluß 25 mit dem Tragring 29 und den Füllkörpern 28 ist mittels an dem Tragring schwenkbar gelagerter Klinkenhebel 30 in zwei Positionen axial festlegbar, und zwar in der in Figur 1 gezeigten Normalsaat-Position, indem die Klinken in eine maschinenfeste Ringnut 38 eingelegt sind. Die Ringnut 38 erlaubt ein Mitdrehen des Tragrings 29 und der Füllkörper 28 mit dem Zellenrad. Durch Ausrasten der Klinkenhebel 30 aus der in Figur 1 in die in Figur 3 gezeigte Stellung wird der stirnseitige Abschluß 25 freigegeben, so daß der Tragring 29 mit den Füllkörpern 28 auf dem Zellenrad 15 axial in die in Figur 3 gezeigte Position verschoben werden kann. Diese Position wird für die Feinsaat eingestellt. Dabei greifen die Klinken der Klinkenhebel 30 in je eine Nut 39 an diametral liegenden Zellenradstegen 31 des Zellenrades 15 ein. Die Füllkörper 28 sind axial fixiert, laufen aber mit dem Zellenrad um.

Wie aus Figur 2 und 4 ersichtlich, füllen die Füllkörper 28 die Dosierzellen 26 nicht vollständig aus. Sie weisen an der äußeren Peripherie einen achsparallelen Steg 32 auf, so daß zwischen diesem und den Zellenradstegen 31 einerseits sowie zwischen der Peripherie des Zellenrades 15 und den Füllkörpern 28 schmale Dosierspalte 33 für die Feinsaat verbleiben.

Um auch an der Durchführung der Seitenwand 14 ein Austreten von Saatgut zu verhindern, ist in der entsprechenden Öffnung der Seitenwand 18 ein Lagerteil 34 angeordnet, das wiederum Radialnuten aufweist, in denen die Zellenradstege 31 und die Stege 32 der Füllkörper 28 axial geführt sind. Dieses Lagerteil läuft mit der Dosiereinrichtung um und ist gegenüber der Seitenwand 18 in einem Kugellager 35 gelagert.

Die Dosiereinrichtung 14 wird üblicherweise von einem beim Säbetrieb mitlaufenden Bodenrad der Maschine über eine Kette od. dgl. angetrieben. Zu diesem Zweck ist mit dem Lagerteil 34 ein Zahnkranz in Form eines Stirnrades 36 fest verbunden. Mit dem Stirnrad 36 kämmt ein von der Kette angetriebenes Zahnrad 40 (Fig. 5), das achsparallel zum Stirnrad an der Maschine ausrückbar gelagert ist, um die Dosiereinrichtung vom Antrieb abkuppeln und stillsetzen oder eine Abdrehprobe durchführen zu können. Ferner kämmt mit dem Stirnrad 38 ein Ritzel 37 auf der Rührwerkswelle 12, so daß das Rührwerk 11 bei Betrieb der Dosiereinrichtung 14 mitläuft. Um das Rührwerk 11 unabhängig von der Dosiereinrichtung stillsetzen zu können, kann das Ritzel 37 auf der Rührwerkswelle 12 axial verschoben wer- den, so daß es außer Eingriff kommt mit dem Zahnkranz 36.

Wie Figur 4 zeigt, ist der Boden 27 des Auslaufschachtes 3 als Klappe ausgebildet, die in die strichpunktierte Lage geschwenkt werden kann. In dieser Lage kann das Saatgut für eine Abdrehprobe in einen untergestellten Behälter fallen. Die Abdrehprobe wird bei von dem Zahnrad 40 freigestelltem Stirnrad 36 durch Drehen der Achse 16 mittels einer auf das in Fig. 1 linke Ende der Achse aufgesteckten Handkurbel oder durch einen dort angekuppelten Stellmotor mit Rückmelder bei einer bestimmten axialen Stellung der Dosiereinrichtung für das jeweils auszubringende Saatgut vorgenommen.

## Patentansprüche

1. Sämaschine mit einem Saatgutbehälter mit wenigstens einer Auslauföffnung (2), einem daran anschließenden Auslaufschacht (3) und einer in deren Seitenwänden gelagerten Dosiereinrichtung (14), bestehend aus einem drehangetriebenen, axial verstellbaren Zellenrad (15) zum Dosieren von Normalsaat, das an seiner einen Seite mittels einer mit ihm axial beweglichen, drehfesten Hülse (19) in der einen Seitenwand (17) gelagert ist, leistenförmigen Füllkörpern (28), die auf dem Zellenrad axial verstellbar sind und an ihrem Umfang Dosierspalte (33) zum Dosieren von Feinsaat bilden, und einem diese Dosierspalte axial begrenzenden Lagerteil (34), mit dem die Dosiereinrichtung (14) in der anderen Seitenwand (18) drehgelagert ist, dadurch gekennzeichnet, daß die Hülse (19) den einen stirnseitigen Abschluß für sämtliche Dosierzellen (26) des Zellenrades (15) beim Dosieren von Normalsaat (15) und für sämtliche Dosierspalte beim Dosieren von Feinsaat bildet, daß die leistenförmigen Füllkörper (28) in einer Normalsaat- Position, in der sie den anderen stirnseitigen Abschluß (25) für die Dosierzellen (26) bilden, an der Maschine und in einer Feinsaat-Position, in der sie die Dosierzellen ausfüllend mit ihren inneren Enden der Hülse anliegen, an dem Zellenrad (15) axial festlegbar sind, und daß zum Dosieren von Normalsaat und Feinsaat eine einzige Stelleinrichtung (20,21) vorgesehen ist, die axial auf die Hülse (19) und das Zellenrad (15) wirkt.

2. Sämaschine nach Anspruch 1, dadurch gekennzeichnet, daß die Hülse (19) kreiszylindrisch walzenförmig ausgebildet und außerhalb der Seitenwand (17) drehfest abgestützt ist.

3. Sämaschine nach Anspruch 1 oder 2, dadurch gekennzeichnet, daß die Hülse (19) und das Zellenrad (15) den gleichen Außendurchmesser aufweisen.

4. Sämaschine nach einem der Ansprüche 1 bis 3, dadurch gekennzeichnet, daß die leistenförmigen Füllkörper (28) an ihren außerhalb des Auslaufschachtes (3) liegenden Enden an einem Tragring (29) angeordnet sind, der an seinem Innenumfang Radialnuten aufweist, mit denen er auf den Zellenradstegen (31) geführt ist.

5. Sämaschine nach Anspruch 4, dadurch gekennzeichnet, daß die leistenförmigen Füllkörper (28) mittels des Tragrings (29) zwischen der Normalsaat- und der Feinsaat-Position verstellbar sind.

6. Sämaschine nach Anspruch 4 oder 5, dadurch gekennzeichnet, daß an dem Tragring (29) Klinkenhebel (30) gelagert sind, die zur axialen Festlegung der Füllkörper (28) in der Normalsaat-Position in eine maschinenfeste Ringnut (38) und in der Feinsaat-Position in eine Nut (39) am Zellenrad (15) einlegbar sind.

7. Sämaschine nach einem der Ansprüche 1 bis 6, dadurch gekennzeichnet, daß die Hülse (19) mit ihrer innen liegenden Stirnseite der ihr zugekehrten Stirnseite des Zellenrades (15) bis auf ein geringes Spiel anliegt und in seinem dem Auslaufschacht (3) zugekehrten Bereich einen größeren Abstand (24) aufweist.

8. Sämaschine nach einem der Ansprüche 1 bis 7, wobei die Dosiereinrichtung von einem aushebbaren Bodenrad der Maschine angetrieben ist, dadurch gekennzeichnet, daß das Bodenrad mit einem Stirnrad (36) am Lagerteil (34) getrieblich verbunden ist.

9. Sämaschine nach Anspruch 8, dadurch gekennzeichnet, daß die Getriebeverbindung ein Zahrad (40) aufweist, das im Säbetrieb mit dem Stirnrad (36) am Lagerteil (34) kämmt, und zum Unterbrechen der Getriebeverbindung ausrückbar ist.

10. Sämaschine nach Anspruch 8 oder 9 mit einem oberhalb der Auslauföffnung (2) im Saatgutbehälter umlaufenden Rührwerk (11), dessen Welle nach außen geführt und mit dem Bodenrad getrieblich verbunden ist, dadurch gekennzeichnet, daß die Welle (12) des Rührwerks (11) ein Ritzel (37) aufweist, das mit dem Stirnrad (36) am Lagerteil (34) kämmt.

11. Sämaschine nach Anspruch 10, dadurch gekennzeichnet, daß das Ritzel (37) zum Stillsetzen des Rührwerks (11) ausrückbar ist.

12. Sämaschine nach einem der Ansprüche 1 bis 11, dadurch gekennzeichnet, daß das Zellenrad (15) drehfest und die Hülse (19) drehfrei auf einer gemeinsamen Achse (16) fluchtend hintereinander angeordnet sind und die Stelleinrichtung (20,21) direkt oder über die Hülse auf die Achse wirkt.

13. Sämaschine nach einem der Ansprüche 1 bis 12, dadurch gekennzeichnet, daß die Stelleinrichtung eine mit der Achse (16) fluchtende Spindel (20) aufweist, die maschinenfest geführt ist.

14. Sämaschine nach einem der Ansprüche 1 bis 13 mit einer an der Auslauföffnung (2) angeordneten, elastischen Abstreifleiste (5), über die das Zellenrad (15) mit den gefüllten Dosierzellen (26) bzw. Dosierspalte hinwegläuft, dadurch gekennzeichnet, daß die Abstreifleiste (5) aus einer Vielzahl nebeneinander angeordneter, einzeln beweglicher Abstreiflappen (6) besteht.

15. Sämaschine nach Anspruch 14, dadurch gekennzeichnet, daß die Abstreiflappen (6) aus gummielastisch ummantelten Federstahlfingern (7) bestehen.

16. Sämaschine nach einem der Ansprüche 1 bis 15, wobei der Saatgutbehälter einen zur Auslauföffnung (2) führenden Zulaufschacht (1) aufweist, in welchem das Rührwerk (11) angeordnet ist und dessen untere Begrenzungswand (9) zum Entleeren des Saatgutbehälters abklappbar ist, dadurch gekennzeichnet, daß die Begrenzungswand (9) an ihrem oberen, dem Saatgutbehälter zugekehrten Bereich (10) angelenkt ist.

17. Sämaschine nach einem der Ansprüche 1 bis 16, dadurch gekennzeichnet, daß der an die Auslauföffnung (2) anschließende Auslaufschacht (3) unmittelbar hinter der Abstreifleiste (5) einen abklappbaren Boden (27) aufweist.

## Claims

1. Sowing machine with a seed container having at least one discharge opening (2), a discharge shaft (3) connected thereto and a proportioning device (14) mounted in the side walls thereof and comprising a rotated, axially adjustable bucket wheel (15) for proportioning normal seed, which is mounted on its one side by means of a non-rotary sleeve (19) axially movable therewith in one side wall (17), ledge-like filling bodies (28), which are axially adjustable on the bucket wheel and form on their circumference proportioning gaps (33) for proportioning fine seed, and a bearing part (34) axially defining said proportioning gaps and with which the proportioning device (14) is rotary-mounted in the other side wall (18), characterized in that the sleeve (19) forms one front end closure for all the proportioning buckets (26) of the bucket wheel (15) during the proportioning of normal seed (15) and for all the proportioning gaps when proportioning fine seed, that the ledge-like filling bodies in a normal seed position, in which they form the other front end closure (25) for the proportioning buckets (26), can be axially fixed to the machine and in a fine seed position, in which they engage with their inner ends on the sleeve while filling the proportioning buckets, to the bucket wheel (15), and that for proportioning normal seed and fine seed a single adjusting device (20, 21) is provided, which acts axially on the sleeve (19) and the bucket wheel (15).

2. Sowing machine according to claim 1, characterized in that the sleeve (19) is circular cylindrical barrel-shaped and is supported in non-rotary manner outside the side wall (17).

3. Sowing machine according to claim 1 or 2, characterized in that the sleeve (19) and bucket wheel (15) have the same external diameter.

4. Sowing machine according to one of the claims 1 to 3, characterized in that the ends of the ledge-shaped filling bodies (28) located outside the discharge shaft (3) are placed on a bearing ring (29), which has on its inner circumference radial grooves with which it is guided on the bucket wheel webs (31).

5. Sowing machine according to claim 4, characterized in that the ledge-like filling bodies (28) are adjustable between the normal and the fine seed position by means of the bearing ring (29).

6. Sowing machine according to claim 4 or 5, characterized in that on the bearing ring (29) are mounted ratchet levers (30), which for axially fixing the filling bodies (28) in the normal seed position can be inserted in a machine-fixed ring groove (38) and in the fine seed position in a groove (39) on the bucket wheel (15).

7. Sowing machine according to one of the claims 1 to 6, characterized in that the inner front end of the sleeve (19) engages on the facing front end of the bucket wheel (15) except for a small clearance and in an area facing the discharge shaft (3) has a larger spacing (24).

8. Sowing machine according to one of the claims 1 to 7, in which the proportioning device is driven by a raisable bottom wheel of the machine, characterized in that the bottom wheel is gear-connected with a spur gear (36) on the bearing part (34).

9. Sowing machine according to claim 8, characterized in that the gear connection has a gear wheel (40), which meshes with the spur gear (36) on the bearing part (34) when sowing and can be disengaged for interrupting the gear connection.

10. Sowing machine according to claim 8 or 9 with a stirrer (11) rotating above the discharge opening (2) in the seed container and whose shaft is led outwards and is gear-connected to the bottom wheel, characterized in that the shaft (12) of the stirrer (11) has a pinion (37), which meshes with the spur gear (36) on the bearing part (34).

11. Sowing machine according to claim 10, characterized in that the pinion (37) can be disengaged for stopping the stirrer (11).

12. Sowing machine according to one of the claims 1 to 11, characterized in that the bucket wheel (15) is placed in non-rotary manner and the sleeve (19) in rotary manner in alignment with one another on a common shaft (16) and the adjusting device (20, 21) acts on the shaft directly or via the sleeve.

13. Sowing machine according to one of the claims 1 to 12, characterized in that the adjusting device has a spindle (20), guided in machine-fixed manner and aligned with the shaft (16).

14. Sowing machine according to one of the claims 1 to 13 with an elastic stripping ledge (5) located on the discharge opening (2) and over and beyond which passes the bucket wheel (15) with the filled proportioning buckets (26) or proportioning gaps, characterized in that the stripping ledge (5) comprises a plurality of juxtaposed, individually movable stripping flaps (6).

15. Sowing machine according to claim 14, characterized in that the stripping flaps (6) are made from rubber elastic enveloped spring steel fingers (7).

16. Sowing machine according to one of the claims 1 to 15, in which the seed container has a feed shaft (1) leading to the discharge opening (2) and in which is located the stirrer (11) and whose lower boundary wall (9) can be tilted for emptying the seed container, characterized in that in its upper area (10) facing the seed container the boundary wall (9) is articulated.

17. Sowing machine according to one of the claims 1 to 16, characterized in that the discharge shaft (3) connected to the discharge opening (2) has a tiltable base (27) directly behind the stripping ledge (5).

## Revendications

1. Semoir comprenant un réservoir de semence présentant au moins une sortie (2) d'écoulement, un puits d'écoulement (3) adjacent à celle-ci et un dispositif de dosage (14) disposé dans ses parois latérales, composé d'une roue à alvéoles (15) pour le dosage de semence normale, entraînée en rotation et réglable axialement, roue montée par l'une de ses faces dans l'une des parois latérales (17) au moyen d'un manchon (19) résistant à la torsion et mobile axialement avec elle, de corps de remplissage (28) en forme de barres, réglables axialement sur la roue à alvéoles et formant à leur périphérie une fente de dosage (33) pour le dosage de semence fine, ainsi qu'une pièce palière (34) délimitant axialement cette fente par laquelle le dispositif de dosage (14) est monté pivotant dans l'autre paroi (18), caractérisé en ce que le manchon (19) constitue l'une des fermetures de face frontale pour l'ensemble des alvéoles doseuses (26) de la roue à alvéoles (15) lors de l'opération de dosage de semence normale et pour l'ensemble des fentes doseuses lors de l'opération de dosage de semence fine, en ce que les corps de remplissage (28) en forme de barres sont immobilisables axialement sur la machine dans une position de semence normale, dans laquelle ils constituent l'autre fermeture (25) de face frontale pour les alvéoles doseuses (26), et sur la roue à alvéoles (15) dans une position de semence fine, position dans laquelle ils sont contigus au manchon par leur extrémité interne tout en remplissant les alvéoles doseuses, et en ce qu'un seul dispositif de réglage (20,21) est prévu pour le dosage de semence normale et de semence fine, agissant axialement sur le manchon (19) et la roue à alvéoles (15).

2. Semoir selon la revendication 1, caractérisé en ce que le manchon (19) est conformé en tambour de forme cylindrique circulaire et en ce qu'il est immobilisé en torsion à l'extérieur de la paroi latérale (17).

3. Semoir selon l'une quelconque des revendications 1 ou 2, caractérisé en ce que le manchon (19) et la roue à alvéoles présentent le même diamètre extérieur.

4. Semoir selon l'une quelconque des revendications 1 à 3, caractérisé en ce que les corps de remplissage (28) en forme de barres sont montés par leurs extrémités situées à l'extérieur du puits d'écoulement (3) à une bague-support (29) présentant sur sa circonférence intérieure des rainures radiales par lesquelles elle est guidée sur les nervures (31) de la roue à alvéoles.

5. Semoir selon la revendication 4, caractérisé en ce que les corps de remplissage (28) en forme de barres sont réglables par l'intermédiaire de la bague-support (29) entre la position de semence normale et la position de semence fine.

6. Semoir selon l'une quelconque des revendications 4 ou 5, caractérisé en ce que des leviers à cliquet (30) sont montés sur la bague-support (29), leviers pouvant être introduits dans une rainure annulaire (38), solidaire du bâti de machine, en vue de l'immobilisation axiale des corps de remplissage (28) dans la position de semence normale, et dans une rainure (39) de la roue à alvéoles dans la position de semence fine.

7. Semoir selon l'une quelconque des revendications 1 à 6, caractérisé en ce que le manchon (19) est adjacent par sa face frontale située à l'intérieur à la face frontale en regard de la roue à alvéoles (15), hormis un léger jeu, et qu'elle présente dans sa zone faisant face au puits d'écoulement (3) un intervalle (24) plus grand.

8. Semoir selon l'une quelconque des revendications 1 à 7, dans lequel le dispositif de dosage est entraîné par une roue d'entrée amovible de la machine par relevage, caractérisé en ce que la roue d'entrée est reliée par un engrenage à une roue dentée de tête (36) de la pièce palière (34).

9. Semoir selon la revendication 8, caractérisé en ce que la liaison par engrenage présente une roue dentée (40) qui s'engrenne sur la roue de tête (36) de la pièce palière (34) au cours de l'opération de semage, et peut être désaccouplée pour interrompre la liaison par engrenage.

10. Semoir selon l'une quelconque des revendications 8 ou 9 comprenant un dispositif malaxeur (11) tournant dans le réservoir à semence au-dessus de l'ouverture d'écoulement (2), dispositif dont l'arbre est guidé vers l'extérieur et relié par engrenage à la roue d'entrée, caractérisé en ce que l'arbre (12) du dispositif malaxeur (11) présente un pignon (37) qui s'engrenne sur la roue de tête (36) de la pièce palière (34).

11. Semoir selon la revendication 10, caractérisé en ce que le pignon (37) peut être désaccouplé pour arrêter le dispositif malaxeur (11).

12. Semoir selon l'une quelconque des revendications 1 à 11, caractérisé en ce que la roue à alvéoles (15) montée immobilisée en rotation et le manchon (19) monté libre en rotation sont alignés l'un derrière l'autre sur un arbre commun (16), et en ce que le dispositif de réglage (20,21) agit sur l'arbre, directement ou par l'intermédiaire du manchon.

13. Semoir selon l'une quelconque des revendications 1 à 12, caractérisé en ce que le dispositif de réglage présente une tige (20), coaxiale à l'arbre (16), guidée par rapport au bâti de machine.

14. Semoir selon l'une quelconque des revendications 1 à 13 comprenant une raclette souple de nettoyage (5) disposée au niveau de l'ouverture d'écoulement (2), au-dessus de laquelle passent les alvéoles remplies de la roue alvéolée (15) ou la fente de dosage, caractérisé en ce que la raclette de nettoyage (5) consiste en un grand nombre de languettes nettoyantes (6) disposées côte à côte et mobiles individuellement.

15. Semoir selon la revendication 14, caractérisé en ce que les languettes nettoyantes (6) consistent en des doigts en acier à ressort revêtus de gomme élastique.

16. Semoir selon l'une quelconque des revendications 1 à 15, dans lequel le réservoir à semence présente un puits d'amenée (1) menant à l'orifice d'écoulement (2), puits dans lequel est disposé le dispositif malaxeur (11) et dont la paroi de délimitation inférieure (9) est rabattable pour vider le réservoir de semence, caractérisé en ce que la paroi de délimitation (9) est articulée dans sa zone (10) supérieure faisant face au réservoir à semence.

17. Semoir selon l'une quelconque des revendications 1 à 16, caractérisé en ce que le puits d'écoulement (3) adjacent à l'orifice d'écoulement (2) présente immédiatement derrière la raclette de nettoyage (5) un fond (27) rabattable.
